# FASCICULE DE BREVET EUROPEEN

(11) **EP 1 200 243 B1**
(45) Date de publication et mention de la délivrance du brevet: **26.03.2003**
(21) Numéro de dépôt: 00948069.0
(22) Date de dépôt: 03.07.2000
(51) Int. Cl.: B29C 49/36, B29C 49/56, B29C 49/42

(54) **MACHINE DE SOUFFLAGE A MOULES BI-EMPREINTES**
BLASFORMMASCHINE MIT ZWEI FORMKAVITÄTEN
BLOWING MACHINE WITH DOUBLE CAVITY MOULDS

(30) Priorité: 05.07.1999 FR 9908817
(43) Date de publication de la demande: 02.05.2002
(73) Titulaire: SIDEL, 76053 Le Havre Cedex (FR)
(72) Inventeur: LINGLET, Stéphane, F-76053 Le Havre Cedex (FR)
(74) Mandataire: Siloret, Patrick
(86) Numéro de dépôt international: FR0001879
(87) Numéro de publication internationale: WO01002157

(56) Documents cités:
- EP-A- 0 858 878
- FR-A- 1 308 594
- FR-A- 2 709 264
- US-A- 5 551 860

## Description

L'invention se rapporte au domaine des machines rotatives de soufflage de récipients en matière thermoplastique dans lesquelles le récipient est obtenu par soufflage d'une préforme préalablement réalisée par moulage par injection.

Elle se rapporte plus particulièrement au domaine des machines comportant au moins un poste de soufflage dans lequel une unité porte-moule porte un moule bi-empreinte possédant deux cavités de moulage destinées à recevoir chacune une préforme. Le poste de soufflage comporte dans ce cas un bloc de soufflage muni de deux tuyères de soufflage qui sont mobiles entre une position escamotée et une position de soufflage dans laquelle les tuyères peuvent injecter du fluide sous pression dans les préformes pour assurer le moulage des récipients. Pour ce faire, le bloc de soufflage est fixé sur un élément de bâti du poste de soufflage de telle manière que les deux tuyères sont agencées de part et d'autre d'un axe central de l'unité porte-moule, en correspondance avec les axes principaux des deux cavités de moulage.

L'invention sera plus particulièrement destinée à être mise en oeuvre sur des machines rotatives comportant plusieurs postes de soufflage agencés sur un rotor animé d'un mouvement de rotation continu. Ces machines rotatives permettent d'obtenir de grandes cadences de production. La conception de machines bi-empreintes, dans lesquelles chaque poste de soufflage peut procéder au soufflage simultané de deux récipients, permet encore d'augmenter la cadence de production tout en diminuant le prix unitaire des récipients ainsi produits.

Cependant, les récipients qui peuvent être fabriqués avec ces moules à deux cavités sont des articles de volume modeste. En effet, la taille des deux récipients est limitée par la taille du moule, elle-même limitée par la taille de l'unité porte-moule. Or, sur une machine rotative, on ne peut pas embarquer des unités porte-moule de taille trop importante car cela aurait pour conséquence d'augmenter de manière trop considérable l'inertie du rotor de la machine. Ainsi, dans les machines rotatives à hautes cadences actuellement connues, le volume maximal des récipients susceptibles d'être produits dans un moule bi-empreinte est inférieur a un litre.

Or, il est apparu que, dans beaucoup de cas, les produits qui sont vendus dans de tels récipients, notamment les boissons, sont vendus dans des récipients de tailles différentes. Ainsi, un producteur peut souhaiter disposer de récipients de différents formats, ces récipients devant dans tous les cas être produits dans les conditions les plus avantageuses.

Or, jusqu'à présent, pour produire des récipients à faible coût, il était nécessaire de disposer de deux types de machines : une machine de type bi-empreinte pour les récipients de faible volume et une machine mono-empreinte pour les récipients plus grands.

Le document FR-2 709 264 décrit une telle machine du type bi-empreinte.

Pour remédier à cet état de fait, l'invention a pour but de proposer une nouvelle conception d'une machine de soufflage qui permette de produire indifféremment les deux types de récipients au plus faible coût, la même machine étant susceptible d'être configurée pour produire un ou deux récipients par poste de soufflage, sans nécessiter de trop grandes modifications de la machine pour passer d'un type de production à l'autre.

Pour cela, l'invention propose une machine du type décrit précédemment, caractérisée en ce que la machine peut être transposée dans une configuration mono-empreinte dans laquelle l'unité porte-moule porte un moule mono-empreinte comportant une unique cavité de moulage dont l'axe est sensiblement confondu avec l'axe principal de l'unité porte-moule, et en ce que le bloc de soufflage comporte une seconde position de fixation sur l'élément de bâti dans laquelle une première des deux tuyères, dite tuyère active, est agencée en correspondance avec l'axe principal de l'unique cavité de moulage du moule mono-empreinte.

Selon d'autres caractéristiques de l'invention :
- le bloc de soufflage est déplacé en coulissement entre ses deux positions de fixation sur le bâti ;
- le poste de soufflage comporte des moyens pour inhiber la seconde tuyère, dite tuyère passive, de manière qu'elle soit isolée de la source de fluide sous pression ;
- les deux tuyères sont alimentées en fluide sous pression par une source commune au travers d'un répartiteur intégré au bloc de soufflage, et le répartiteur comporte des moyens pour isoler la tuyère passive de la source de fluide sous pression ;
- les tuyères sont mobiles par rapport au bloc de soufflage entre une position escamotée et une position de soufflage, et, en configuration mono-empreinte, la seconde tuyère, dite tuyère passive, est immobilisée dans une position escamotée ;
- au cours du soufflage, chaque préforme est étirée grâce à une tige d'étirage qui est engagée axialement à l'intérieur de la préforme, au travers de la tuyère de soufflage correspondante ; le poste de soufflage comporte un chariot d'étirage qui est guidé axialement sur l'élément de bâti ; le chariot comporte un premier et un second emplacement de fixation destinés chacun à recevoir une tige d'étirage lorsque la machine est en configuration bi-empreinte, et un troisième emplacement de fixation qui est utilisé exclusivement pour recevoir une tige d'étirage lorsque la machine est en configuration mono-empreinte, ledit emplacement étant aligné avec l'axe principal de l'unité porte-moule.

D'autres caractéristiques et avantages de l'invention apparaîtront à la lecture de la description détaillée qui suit ainsi que dans les dessins annexés dans lesquels :
- les figures 1 et 2 sont des vues schématiques, en coupe partielle selon un plan radial du rotor d'une machine selon l'invention, dans lesquelles on a illustré un poste de soufflage respectivement en configuration bi-empreinte et en configuration mono-empreinte ; et
- les figures 3 et 4 sont des vues schématiques en perspective d'un bloc de soufflage d'une machine selon l'invention, respectivement en configuration bi-empreinte et en configuration mono-empreinte.

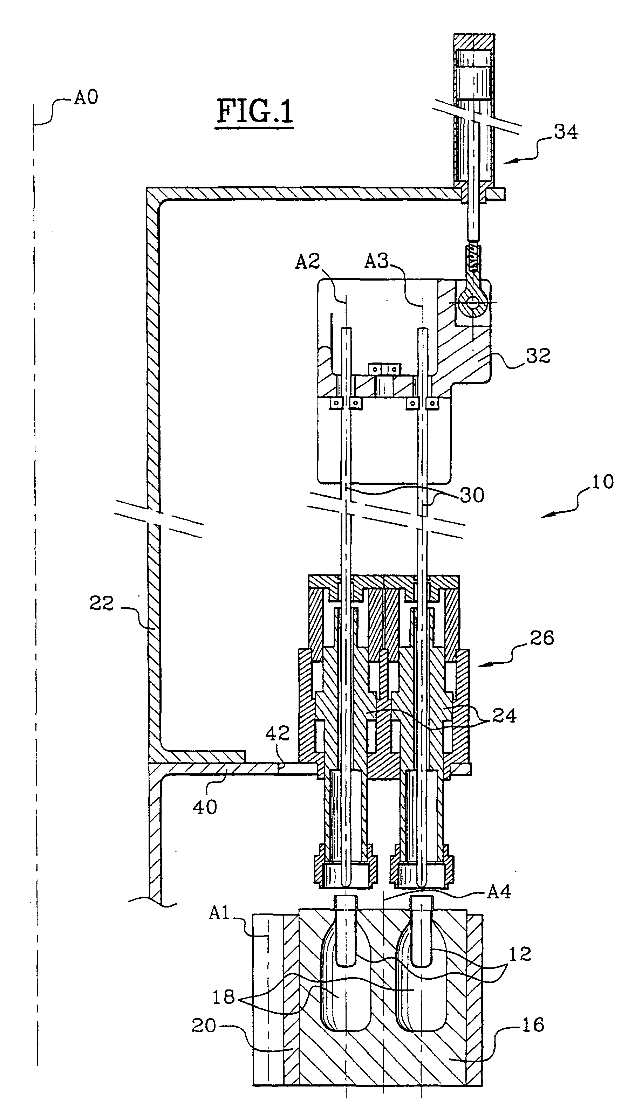

On a représenté sur la figure 1 un poste de soufflage 10 destiné à une machine de moulage de récipients par soufflage de préformes 12 préalablement réalisées par moulage par injection.

Ce poste 10 est un poste de type bi-empreinte permettant de produire, de manière simultanée, deux récipients, à partir de deux préformes 12 engagées simultanément dans un moule bi-empreinte 16 porté par une unité porte-moule 20 du poste 10. Le moule 16 est réalisé en deux parties, chaque partie comportant deux demi-cavités 18 à la forme du récipient à obtenir. L'unité porte-moule 20 est elle aussi réalisée en deux parties qui portent chacune une partie du moule 16. Les deux parties de l'unité porte-moule 20 sont par exemple articulées autour d'un axe A1 à la fois entre elles et par rapport à un bâti 22 du poste de soufflage 10. Le poste de soufflage 10 fait partie de préférence d'un rotor d'une machine rotative comportant plusieurs postes de soufflage identiques, le rotor étant animé d'un mouvement de rotation continu autour d'un axe A0.

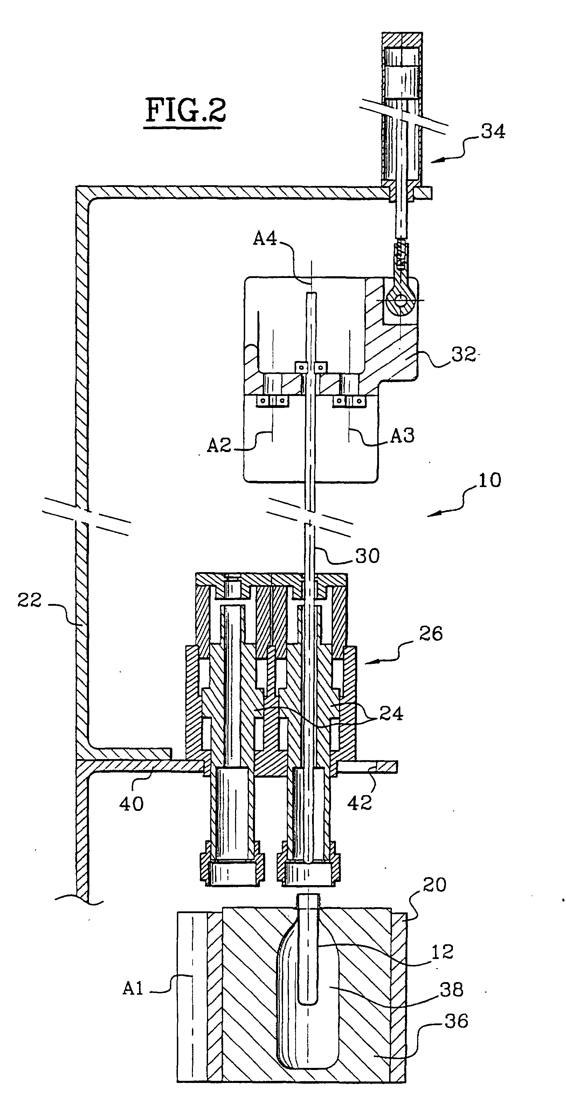

Comme on peut le voir sur les figures, les axes A0 et A1 sont parallèles et ils définissent un plan radial du rotor de la machine. Ce plan radial, qui est celui des figures 1 et 2, est aussi le plan de joint des deux parties du moule 16.

Dans l'exemple illustré, on peut voir que les cavités 18 du moule 16 sont agencées selon des axes A2 et A3 contenus dans le plan radial, parallèles aux axes A0 et A1, et décalés selon la direction radiale. Les deux cavités sont disposées dans le moule 16 de manière sensiblement symétrique de part et d'autre d'un axe principal A4, sensiblement central, du moule 16 et du porte-moule 20.

Pour la clarté de la description, on considérera que les axes A0 à A4 sont des axes verticaux et que les récipients sont moulés avec leur extrémité ouverte vers le haut ainsi que cela est représenté sur les figures. Ce choix arbitraire ne doit pour autant pas être considéré comme une limitation à la portée de l'invention.

L'air sous pression qui permet le soufflage des récipients est amené aux préformes 12 emprisonnées dans le moule par des tuyères de soufflage 24 qui sont mobiles axialement entre une position haute escamotée illustrée sur les figures et une position basse, non représentée, dans laquelle les tuyères peuvent coopérer de manière étanche avec les préformes. Dans l'exemple illustré, les tuyères comportent une extrémité inférieure en forme de cloche qui est destinée à venir en appui de manière étanche contre une face supérieure du moule 16, autour de l'extrémité ouverte de la préforme 12 qui dépasse au-dessus de ladite face supérieure du moule 16.

Dans l'exemple illustré, chaque tuyère 24 est réalisée sous la forme d'une pièce indépendante qui est montée à coulissement dans un bloc de soufflage 26. Les mouvements des deux tuyères sont commandés de manière indépendante. En l'occurrence, chaque tuyère 24 forme un piston qui délimite dans le bloc de soufflage 26 des chambres à volume variable. L'alimentation en air sous pression de ces chambres permet de commander les mouvements axiaux des tuyères.

On peut voir que les deux tuyères 24 sont agencées respectivement selon les axes A2 et A3 des cavités 18 du moule bi-empreinte.

Par ailleurs, le poste de soufflage comporte deux tiges d'étirage 30 qui sont agencées selon les axes A2 et A3, et qui peuvent coulisser chacune au travers d'une des tuyères 24. Les extrémités supérieures des tiges 30 sont fixées de manière démontable à un chariot 32 qui coulisse axialement par rapport au bâti 22 et qui est commandé par un vérin d'étirage 34. Au cours du soufflage, le vérin d'étirage 34 provoque la descente du chariot 32 de sorte que l'extrémité inférieure des tiges 30 s'engage à l'intérieur de la préforme 12 correspondante pour contrôler l'étirage axial de cette préforme.

Conformément aux enseignements de l'invention, le poste de soufflage 10 est prévu pour pouvoir être facilement transposé d'une configuration bi-empreinte telle qu'elle vient d'être décrite à une configuration mono-empreinte dans laquelle il n'est plus fabriqué qu'un seul récipient par moule et par cycle.

Ainsi, comme on peut le voir à la figure 2, le porte-moule 20 peut recevoir, sans être modifié ni être déplacé, un moule mono-empreinte 36 qui ne comporte qu'une seule cavité 38. La cavité 38 est alors agencée de préférence sensiblement au centre du moule, selon l'axe principal A4, de manière à augmenter le volume disponible tout en conservant une répartition de matière à peu près symétrique dans le moule 36.

Avec un tel moule, il serait impossible d'utiliser le bloc de soufflage 26 dans sa configuration de la figure 1 car l'axe A4 de la cavité 38 ne coïncide avec aucun des deux axes A2 et A3 des tuyères 24 en configuration bi-empreinte. Aussi, selon l'invention, il est prévu de pouvoir déplacer le bloc de soufflage 26, par simple coulissement selon la direction radiale, de manière à amener l'axe de l'une des deux tuyères 24 en correspondance avec l'axe A4 de la cavité 38. Cette tuyère, dite active, sera la seule à être opérationnelle dans cette configuration mono-empreinte du bloc de soufflage 26. L'autre tuyère, dite passive, est destinée à être immobilisée dans sa position haute escamotée.

On peut voir sur les figures que le bloc de soufflage 26 est fixé sur une platine horizontale 40 du bâti 22. Cette platine est percée d'une fenêtre 42 au travers de laquelle les tuyères 24 s'étendent vers le bas en direction de l'unité de moulage. La fenêtre 42 est allongée selon la direction radiale pour permettre le passage du bloc de soufflage de l'une à l'autre de ses deux positions. Le bloc de soufflage 26 comporte donc des rebords transversaux qui prennent appui sur la platine 40 et la fixation du bloc dans l'une ou l'autre de ses deux positions est par exemple assurée de manière démontable par des vis. De préférence, les bords de la fenêtre 42 assurent un guidage du bloc mais on peut aussi prévoir des moyens complémentaires (non représentés) pour assurer un positionnement précis du bloc dans chacune de ses deux positions.

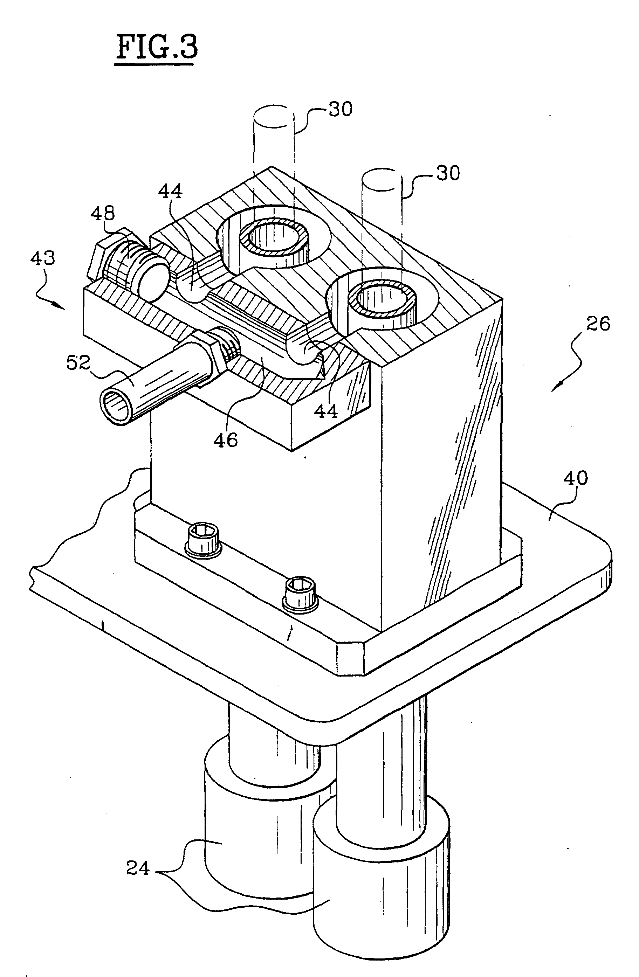

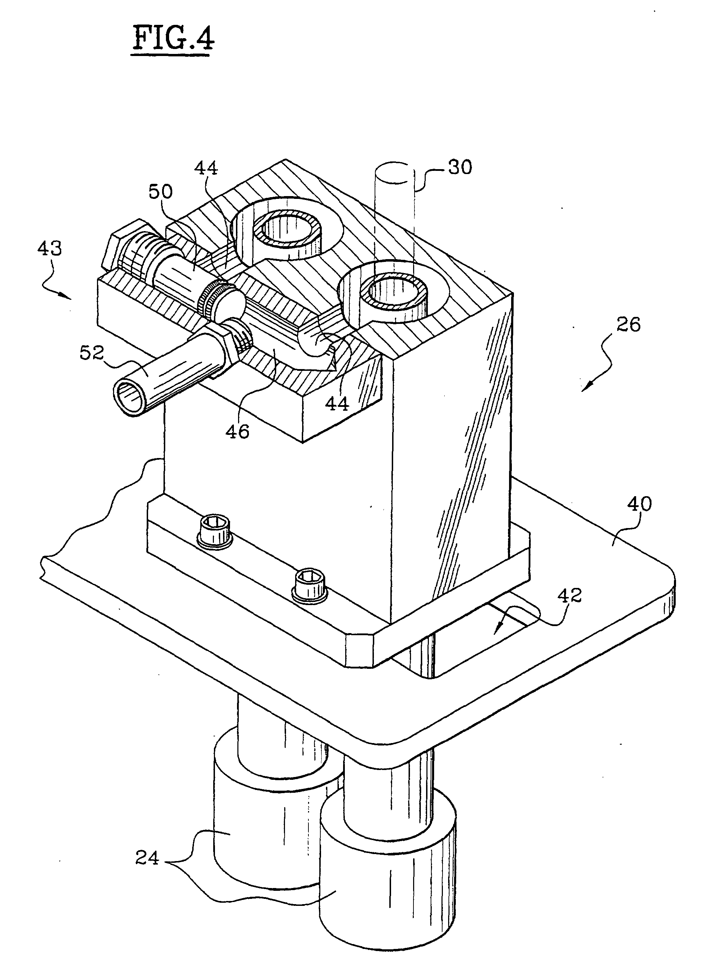

Sur les figures 3 et 4, on a représenté de manière schématique le bloc de soufflage selon l'invention ainsi que les moyens qui permettent d'inhiber l'alimentation de la tuyère passive en air sous pression. Dans le bloc de soufflage illustré, l'air de soufflage sous haute pression est injecté, pour chaque tuyère, dans une chambre supérieure délimitée dans le bloc de soufflage par cette tuyère.

Plus précisément, le bloc de soufflage 26 comporte un répartiteur d'air 43 qui est intégré au bloc 26 et qui est relié d'une part, par un port d'entrée 52, à la source d'air sous pression et d'autre part, par deux orifices 44, avec chacune des deux tuyères 24. Le répartiteur présente ainsi un canal de répartition cylindrique 46 dans lequel débouchent les deux orifices 44 ainsi que le port d'entrée 52 relié à la source d'air sous pression. Ce canal 46 est obstrué à une de ses extrémités par un bouchon interchangeable.

En configuration bi-empreinte, le bouchon est un bouchon court 48 qui empêche seulement l'air sous pression de s'échapper directement vers l'extérieur mais qui n'obstrue ni les orifices 44, ni le port d'entrée 52.

Au contraire, comme on peut le voir sur la figure 4, le bouchon utilisé en configuration mono-empreinte est un bouchon long 50 qui s'étend dans le canal 46 de manière à obstruer aussi l'orifice 44 communiquant avec la tuyère passive. Bien entendu, le bouchon long n'obstrue ni le second orifice 44 ni le port d'entrée 52. Ainsi, en isolant la tuyère passive de la source d'air sous pression, on évite toute consommation d'air inutile.

Dans l'exemple illustré, le bloc de soufflage est réalisé en une seule pièce. Toutefois, on peut aussi choisir de réaliser le bloc sous la forme de deux supports de tuyère séparés eux aussi susceptibles d'être déplacés entre deux positions.

Selon un autre aspect de l'invention, on peut voir que le chariot 32 comporte un troisième moyen de fixation pour recevoir une tige d'étirage 30 selon un emplacement agencé sur l'axe A4. En configuration mono-empreinte, on est donc amené à démonter les deux tiges utilisées en configuration bi-empreinte pour les remplacer par une tige unique agencée sur le troisième emplacement. Cette tige s'étend alors selon l'axe A4 au travers de la tuyère active. Grâce à cette disposition, il n'est pas nécessaire de déplacer le chariot 32 ni le vérin d'étirage 34 lorsque l'on passe d'une configuration à l'autre du poste de soufflage 10.

Grâce à l'invention, il est donc facile d'utiliser la machine soit avec des moules mono-empreinte, soit avec des moules bi-empreinte. En dehors des moules, aucune pièce spécifique n'est nécessaire, hormis éventuellement une tige d'étirage de longueur différente. Le changement de configuration se fait donc par simple déplacement du bloc de soufflage, sans qu'il soit nécessaire de débrancher les différentes conduites pneumatiques qui le relie aux différents circuits de la machine, si l'on a pris soin de choisir des conduites souples.

On obtient ainsi, à moindre coût, une machine capable de produire, dans des conditions techniques et économiques optimales, des récipients de volumes très variés.

## Revendications

1. Machine rotative de soufflage de récipients en matière thermoplastique à partir d'une préforme préalablement injectée, du type comportant plusieurs postes de soufflage (10) montés sur un rotor animé d'un mouvement continu de rotation, du type dans lequel chaque poste de soufflage comporte une unité porte-moule (20) qui peut porter un moule bi-empreinte (16) possédant deux cavités de moulage (18) destinées à recevoir chacune une préforme (12), du type dans lequel chaque poste de soufflage comporte un bloc de soufflage (26) muni de deux tuyères de soufflage (24) qui peuvent injecter du fluide sous pression dans les préformes (12) pour assurer le moulage des récipients, et du type dans lequel le bloc de soufflage (26) est fixé sur un élément de bâti (22) du poste de soufflage de telle manière que les deux tuyères (24) sont agencées de part et d'autre d'un axe principal (A4) de l'unité porte-moule (20), en correspondance avec les axes principaux (A2, A3) des deux cavités de moulage (18),
**caractérisée en ce que** la machine peut être transposée dans une configuration mono-empreinte dans laquelle l'unité porte-moule (20) porte un moule mono-empreinte (36) comportant une unique cavité de moulage (38) dont l'axe est sensiblement confondu avec l'axe principal (A4) de l'unité porte-moule (20), et **en ce que** le bloc de soufflage (26) comporte une seconde position de fixation sur l'élément de bâti dans laquelle une première des deux tuyères (24), dite tuyère active, est agencée en correspondance avec l'axe principal (A4) de l'unique cavité de moulage (38) du moule mono-empreinte (36).

2. Machine de soufflage selon la revendication 1, **caractérisée en ce que** le bloc de soufflage (26) est déplacé en coulissement entre ses deux positions de fixation sur le bâti (22).

3. Machine de soufflage selon l'une quelconque des revendications précédentes, **caractérisée en ce que** le poste de soufflage (10) comporte des moyens (50) pour inhiber la seconde tuyère, dite tuyère passive, de manière qu'elle soit isolée de la source de fluide sous pression.

4. Machine de soufflage selon la revendication 3, **caractérisée en ce que** les deux tuyères (24) sont alimentées en fluide sous pression par une source commune au travers d'un répartiteur (43) intégré au bloc de soufflage (26), et **en ce que** le répartiteur comporte des moyens (50) pour isoler la tuyère passive de la source de fluide sous pression.

5. Machine de soufflage selon l'une quelconque des revendications précédentes, **caractérisée en ce que** les tuyères (24) sont mobiles par rapport au bloc de soufflage (26) entre une position escamotée et une position de soufflage, et **en ce que**, en configuration mono-empreinte, la seconde tuyère, dite tuyère passive, est immobilisée dans une position escamotée.

6. Machine de soufflage selon l'une quelconque des revendications précédentes, **caractérisée en ce que**, au cours du soufflage, chaque préforme (12) est étirée grâce à une tige d'étirage (30) qui est engagée axialement à l'intérieur de la préforme, au travers de la tuyère de soufflage (24) correspondante, **en ce que** le poste de soufflage (10) comporte un chariot d'étirage (32) qui est guidé axialement sur l'élément de bâti (22), et **en ce que** le chariot (32) comporte un premier et un second emplacement de fixation destinés chacun à recevoir une tige d'étirage (30) lorsque la machine est en configuration bi-empreinte, et un troisième emplacement de fixation qui est utilisé exclusivement pour recevoir une tige d'étirage (30) lorsque la machine est en configuration mono-empreinte, ledit emplacement étant aligné avec l'axe principal (A4) de l'unité porte-moule (20).

## Claims

1. Rotary machine for blow moulding thermoplastic containers from a previously injection-moulded preform, of the type having several blow moulding stations (10) mounted on a rotor moving with a continuous rotating movement, of the type in which each blow moulding station has a mould-carrier unit (20) which is able to carry a double-impression mould (16) having two moulding cavities (18), each one intended to receive a preform (12), of the type in which each blow moulding station has a blowing block (26) fitted with two blowing nozzles (24) which are able to inject pressurized fluid into the preforms (12) in order to mould the containers, and of the type in which the blowing block (26) is fastened to a frame element (22) of the blow moulding station such that the two nozzles (24) are arranged on either side of a main axis (A4) of the mould-carrier unit (20), in correspondence with the main axes (A2, A3) of the two moulding cavities (18),
**characterized in that** the machine can be converted into a single-impression configuration in which the mould-carrier unit (20) carries a single-impression mould (36) having a single moulding cavity (38) whose axis is substantially coincident with the main axis (A4) of the mould-carrier unit (20), and **in that** the blowing block (26) has a second fastening position on the frame element in which a first of the two nozzles (24), called the active nozzle, is arranged in correspondence with the main axis (A4) of the single moulding cavity (38) of the single-impression mould (36).

2. Blow moulding machine according to Claim 1, **characterized in that** the blowing block (26) is moved by sliding between its two fastening positions on the frame (22).

3. Blow moulding machine according to either of the preceding claims, **characterized in that** the blow moulding station (10) has means (50) of inhibiting the second nozzle, called the passive nozzle, so that it is isolated from the source of pressurized fluid.

4. Blow moulding machine according to Claim 3, **characterized in that** the two nozzles (24) are fed with pressurized fluid by a common source through a distributor (43) incorporated into the blowing block (26), and **in that** the distributor has means (50) for isolating the passive nozzle from the source of pressurized fluid.

5. Blow moulding machine according to any one of the preceding claims, **characterized in that** the nozzles (24) can be moved with respect to the blowing block (26) between a retracted position and a blow moulding position, and **in that**, in the single-impression configuration, the second nozzle, called the passive nozzle, is immobilized in a retracted position.

6. Blow moulding machine according to any one of the preceding claims, **characterized in that**, during blow moulding, each preform (12) is stretched by means of a stretching rod (30) which is engaged axially inside the preform, through the corresponding blowing nozzle (24), **in that** the blow moulding station (10) has a stretching carriage (32) which is guided axially over the frame element (22), and **in that** the carriage (32) has a first and a second fastening location, each one intended to receive a stretching rod (30) when the machine is in the double-impression configuration, and a third fastening location which is used exclusively for receiving a stretching rod (30) when the machine is in the single-impression configuration, the said location being aligned with the main axis (A4) of the mould-carrier unit (20).

## Patentansprüche

1. Rotationsmaschine zum Blasformen von Behältern aus thermoplastischem Material aus einem zuvor spritzgegossenen Vorformling jener Art, die mehrere Blasformstationen (10) enthält, welche an einem in eine kontinuierliche Drehbewegung versetzten Rotor angebracht sind, jener Art, bei der jede Blasformstation eine Blasformtrageinheit (20) aufweist, die eine Blasform (16) mit zwei Formkonturen tragen kann, welche zwei Formhöhlungen (18) besitzt, die jeweils einen Vorformling (12) aufnehmen sollen, jener Art, bei der jede Blasformstation einen Blasformblock (26) enthält, der mit zwei Blasformdüsen (24) versehen ist, die Druckfluid in die Vorformlinge (12) spritzen können, um das Formen der Behälter zu gewährleisten, und jener Art, bei der der Blasformblock (26) so an einem Rahmenelement (22) der Blasformstation angebracht ist, dass die beiden Düsen (24) auf beiden Seiten einer Hauptachse (A4) der Blasformtrageinheit (20) in Ausrichtung auf die beiden Hauptachsen (A2, A3) der beiden Formhöhlungen (18) angeordnet sind,
**dadurch gekennzeichnet, dass** die Maschine zu einer Konfiguration mit einer Formkontur umgewandelt werden kann, in der die Blasformtrageinheit (20) eine Blasform (36) mit einer Formkontur trägt, die eine einzige Formhöhlung (38) enthält, deren Achse mit der Hauptachse (A4) der Blasformtrageinheit (20) im Wesentlichen zusammenfällt, und dass der Blasformblock (26) eine zweite Befestigungsposition an dem Rahmenelement aufweist, in der eine erste der beiden Düsen (24), die sogenannte aktive Düse, in Ausrichtung auf die Hauptachse (A4) der einzigen Formhöhlung (38) der Blasform (36) mit einer Formkontur angeordnet ist.

2. Blasformmaschine nach Anspruch 1, **dadurch gekennzeichnet, dass** der Blasformblock (26) zwischen seinen beiden Befestigungspositionen am Rahmen (22) verschoben werden kann.

3. Blasformmaschine nach einem der vorhergehenden Ansprüche, **dadurch gekennzeichnet, dass** die Blasformstation (10) Mittel (50) zum Sperren der zweiten Düse, der sogenannten passiven Düse, so dass sie von der Druckfluidquelle getrennt ist, aufweist.

4. Blasformmaschine nach Anspruch 3, **dadurch gekennzeichnet, dass** die beiden Düsen (24) mittels einer gemeinsamen Quelle durch einen in den Blasformblock (26) integrierten Verteiler (43) mit Druckfluid gespeist werden und dass der Verteiler Mittel (50) zur Trennung der passiven Düse von der Druckfluidquelle umfasst.

5. Blasformmaschine nach einem der vorhergehenden Ansprüche, **dadurch gekennzeichnet, dass** die Düsen (24) bezüglich des Blasformblocks (26) zwischen einer ausgelenkten und einer Blasformposition beweglich sind und dass die zweite Düse, die sogenannte passive Düse, in der Konfiguration mit einer Formkontur in einer ausgelenkten Position festgelegt ist.

6. Blasformmaschine nach einem der vorhergehenden Ansprüche, **dadurch gekennzeichnet, dass** jeder Vorformling (12) während des Blasformens dank einer Reckstange (30), die in Axialrichtung im Inneren des Vorformlings durch die entsprechende Blasformdüse (24) in Eingriff steht, gestreckt wird, dass die Blasformstation (10) einen Reckschlitten (32) enthält, der in Axialrichtung am Rahmenelement (22) geführt wird, und dass der Schlitten (32) eine erste und eine zweite Befestigungsstelle aufweist, die jeweils zur Aufnahme einer Reckstange (30), wenn sich die Maschine in der Konfiguration mit zwei Formkonturen befindet, bestimmt sind, sowie eine dritte Befestigungsstelle, die ausschließlich zur Aufnahme einer Reckstange (30), wenn sich die Maschine in der Konfiguration mit einer Formkontur befindet, bestimmt ist, wobei die Stelle somit auf die Hauptachse (A4) der Blasformtrageinheit (20) ausgerichtet ist.
